# EUROPÄISCHE PATENTSCHRIFT

(11) **EP 3 388 370 B1**
(45) Veröffentlichungstag und Bekanntmachung des Hinweises auf die Patenterteilung: **28.06.2023**
(21) Anmeldenummer: 18166499.6
(22) Anmeldetag: 10.04.2018
(51) Int. Cl.: E04H 6/24, E04H 6/34, B62D 65/18, B65G 35/06, B65G 37/02

(54) **VERWENDUNG EINES SPEICHERS FÜR BAUTEILTRÄGERWAGEN**
USE OF A STORAGE UNIT FOR COMPONENT CARRIER TROLLEYS
UTILISATION D'UN STOCKAGE POUR LES CHARIOTS PORTE-PIÈCES

(30) Priorität: 11.04.2017 DE 102017107829
(43) Veröffentlichungstag der Anmeldung: 17.10.2018
(73) Patentinhaber: Ebz Systec GmbH, 88212 Ravensburg (DE)
(72) Erfinder: STADLER, Rainer, 88605 Rast (DE)
(74) Vertreter: Otten, Roth, Dobler & Partner mbB Patentanwälte

(56) Entgegenhaltungen:
- CN-A- 102 407 419
- DE-A1- 10 232 402
- DE-A1-102007 018 196
- DE-A1-102007 034 024
- DE-A1-102010 045 010
- GB-A- 792 864
- GB-A- 2 341 375

## Beschreibung

Aus der DE 102 32 402 A1 ein Puffersystem für die Produktion von Massenartikeln, eine Produktionslinie zur industriellen Herstellung eines Massenartikels und ein Verfahren zur industriellen Massenherstellung von Artikeln bekannt, wobei das Puffersystem mindestens an einen Arbeitsbereich mit Bearbeitungsplätzen anbindbar ist, an denen einzelne Schritte eines Gesamtfertigungsprozesses durchgeführt werden,
mindestens eine Reihe von Pufferplätzen, die dem Arbeitsbereich gegenüberliegend angeordnet ist, und mehrere Förderfahrzeuge aufweist, die sich entlang einer Gasse, die zwischen dem Arbeitsbereich und einer Pufferreihe angeordnet ist, bewegen, zum Fördern der Artikel zwischen den Pufferplätzen und dem Arbeitsbereich. Beim erfindungsgemäßen Verfahren durchlaufen Artikel mehrere Bearbeitungsplätze zur Durchführung einzelner Schritte eines Gesamtfertigungsprozesses. Die Artikel werden auf Pufferplätzen wahlfrei gelagert und mit Förderfahrzeugen zwischen den Bearbeitungsplätzen und Pufferplätzen zum Durchlaufen des Gesamtfertigungsprozesses transportiert.

Weiterhin ist aus der DE 10 2007 034 024 A1 eine Vorrichtung zur Lagerung und/oder Verteilung von Karosserien von Kraftfahrzeugen, insbesondere von Karosserien vor dem Lackieren oder der Durchführung anderer Bearbeitungsschritte bekannt, umfassend mindestens zwei voneinander beabstandete Reihen von Lagerplätzen für die Karosserien, mindestens eine Transporteinheit, auf die eine Karosserie aufgebracht werden kann, wobei die mindestens eine Transporteinheit zwischen den Reihen in deren Längsrichtung bewegt werden kann und wobei die Vorrichtung derart gestaltet ist, dass die Transporteinheit lediglich eine Bewegung in Längsrichtung der Reihen durchführen kann.

Weiterhin ist aus der DE 10 2007 018 196 A1 ein Führungssystem mit Gleisabschnitten sowie auf den Gleisabschnitten verfahrbaren Lastenschlitten bekannt, wobei hier vorgesehen ist, dass die Lastenschlitten einander kreuzende Kufensätze aufweisen, dass die Gleisabschnitte einander kreuzende Schienensätze aufweisen und dass die einander kreuzenden Schienensätze über wenigstens eine Spurhöhenverstellung miteinander verbunden sind.

Weiterhin ist aus der GB 2 341 375 A, welche die Merkmale des Oberbegriffs des Anspruchs 1 offenbart, ein Fördersystem zum Lagern und Abrufen von Artikeln bekannt, welches eine Reihe von Lagergängen zum Aufnehmen von Artikeln in mehreren Lagerbahnen umfasst, wobei sich ein ausgewählter Artikel entlang einer auf einem Artikelträger montierten Förderstrecke bewegt zu einer Shuttle-Station geleitet werden kann, wo dieser auf ein Shuttle geladen wird, um entlang eines Lagergangs bewegt zu werden, um den Artikel und den Träger in einer von vielen Lagerbahnen zu platzieren.

Weiterhin sind aus der GB 792 864 A mechanische Garagen bekannt, wobei Fahrzeuge, die in Abteilen, die auf mehreren Stockwerken eines Gebäudes angeordnet sind, abgestellt werden sollen, zuerst durch einen Aufzug oder zum richtigen Stockwerk befördert werden und dann zu einer mit Rädern versehenen Fördervorrichtung wie einem Wagen geliefert werden, die sie zu einer Position neben einem leeren Abteil transportiert.

In der Patentanmeldung DE 10 2018 108 436 der Anmelderin ist eine Fördereinrichtung für eine automatisierte Fertigungsstraße offenbart, welche Bauteilträgerwagen auf einer Einspurbahn zur Bereitstellung von Bauteilen oder Bauteilgruppen, insbesondere Karosserien beschreibt. Derartige Fertigungsstraßen, z.B. aus dem Bereich des KFZ Rohbaus, benötigen in der Regel eine Vielzahl von Bauteilträgerwagen. Je nach Anwendung können diese Bauteilträgerwägen in unterschiedlichen Ausführungsformen vorliegen, beispielsweise wenn unterschiedliche Karosserie-Modelle oder Baugruppen verarbeitet werden.

Verbleiben entsprechende Bauteilträgerwagen jedoch in der Fertigungsstraße, können diese zu Unterbrechungen des Fertigungstakts oder Verzögerungen in der Fertigung führen. Aufgabe der Erfindung ist es daher, die Zuverlässigkeit, Verfügbarkeit und Vielseitigkeit von Fertigungsstraßen mit entsprechenden Bauteilträgerwagen zu verbessern.

Es wird eine Verwendung einer Speichereinrichtung für mindestens einen Bauteilträgerwagen einer Fördereinrichtung für eine automatisierte Fertigungsstraße gemäß Anspruch 1 vorgeschlagen.

Ein Umsetzen, insbesondere Abheben eines Bauteilträgerwagens von der Einspurbahn erlaubt einen flexiblen Transport an eine Speicherstelle, ohne dass die gesamte Antriebstechnik der Einspurbahn im Bereich der Speicherstellen realisiert sein muss.

Die Speicherbahn im allgemeinen Sinne ist die Bahn, auf welcher der Bauteilträger im Bereich der Speichereinrichtung geführt und bewegt wird. Technisch kann darunter z.B. ein Abschnitt eines Bahnprofils, welcher mit dem allgemeinen Bahnprofil der Fertigungsstrasse übereinstimmt, verstanden werden.

Ein Umsetzen eines Bauteilträgerwagens erfordert die Unterbrechung der Führungsbahn in ihrer Laufrichtung. Dabei ist es unerheblich, ob eine Einspurbahn oder eine Mehrspurbahn vorgesehen ist. Soll ein Bauteilträgerwagen quer zur Bahnrichtung bewegt werden, so muss dieser umgesetzt, insbesondere abgehoben werden, damit er auf einen Abschnitt mit einem Führungsprofil gelangen kann, welches von der Transportbahn entkoppelt bewegt werden kann.

In einer bevorzugten Ausführung ist vorgesehen, dass mindestens eine Hebeeinrichtung im Bereich der Aufnahmestelle und/oder Abgabestelle ausgebildet ist, um den Bauteilträger zu greifen und von der Transportbahn abzuheben oder um einen Abschnitt mit einem Führungsprofil zu greifen, auf welchem der Bauteilträgerwagen angeordnet ist. Es ist auch denkbar, dass die Hebeeinrichtung den nachfolgend beschriebenen Verfahrwagen der Speichereinrichtung anhebt, und diesen auf unterschiedlichen Ebenen einsetzt.

In einer Ausführungsform, bei welcher die Speicherstellen in mehreren horizontalen Ebenen übereinander vorgesehen sind ist es vorteilhaft, die Bauteilträgerwägen alleine oder gemeinsam mit einem Abschnitt des den Bauteilträgerwagen führenden Führungsprofils der Transportbahn anzuheben oder abzusenken. Auf diese Weise kann ohne zusätzlichen Flächenbedarf in der Ebene eine Erweiterung der Speichereinrichtung oberhalb und unterhalb der Arbeitsebene einer Fertigungsstraße erfolgen.

Die Hebeeinrichtung kann dabei den Bauteilträgerwagen bzw. den Profilabschnitt des Führungsprofils oder den Verfahrwagen untergreifen oder in vorgesehene Hilfsmittel eingreifen, um den Bauteilträgerwagen kontrolliert und präzise abzuheben.

Erfindungsgemäß ist es vorgesehen, dass mindestens ein Verfahrwagen umfasst ist, wobei der Verfahrwagen zur Aufnahme eines von der Transportbahn umgesetzten, insbesondere angehobenen Bauteilträgerwagens ausgebildet ist.

Die Übergabe eines aufgenommenen Bauteilträgerwagens an einen Verfahrwagen erlaubt einen schnellen und zuverlässigen Transport an eine Speicherstelle, wobei die Mittel zum Bewegen des aufgenommenen Bauteilträgerwagens von oder in die Speicherstelle, beispielsweise Reibräder, Züge oder andere Antriebe, ausschließlich im Verfahrwagen angeordnet sein können. Auf diese Weise werden technische Komponenten und damit einhergehend Kosten eingespart.

In einer alternativen Ausführungsform ist es auch vorgesehen, dass die Speicherstellen eigene Antriebe oder sonstige Bewegungsmittel aufweisen, welche zur Bewegung der aufgenommenen Bauteilträgerwagen dienen. Dabei müssen zwar zusätzliche Komponenten vorgesehen werden, jedoch kann ggf. die Dynamik des Systems verbessert werden, z.B. um größere Massen schnell zu bewegen. Überdies kann ggf. damit auch eine Reduktion der Masse des Verfahrwagens durch ganze oder teilweise Einsparung der Antriebe erzielt werden, was dessen Bewegungsdynamik, insbesondere bei Leerfahrten erhöht.

Erfindungsgemäß ist vorgesehen, dass der Verfahrwagen zwei Querträger umfasst, wobei die Querträger einen Bauteilträgerwagen an Querträgern des Bauteilträgerwagens aufnehmen und transportieren.

Auf diese Weise können die aus der DE 10 2018 108 436 bekannten Bauteilträgerwägen besonders gut aufgenommen und transportiert werden.

Eine besondere Ausgestaltung der Speichereinheit sieht vor, dass die Speicherstellen in Form eines Rasters angeordnet sind und zwischen den Rastern Verfahrwege für mindestens einen Verfahrwagen zum Transport von abgehobenen Bauteilträgerwagen umfasst sind.

Raster derartige Systeme, insbesondere in Form von Regallagern in der Ebene oder übereinander bieten einen optimierten Speicherraum für eine Vielzahl von Bauteilträgerwägen.

Je nach Taktgeschwindigkeit und für die Speichereinheit zur Verfügung stehendem Bauraum können auch mehrere Verfahrwagen vorgesehen werden, welche für unterschiedliche Speicheraufgaben derart steuerbar sind, dass keine gegenseitige logistische Behinderung erfolgt.

Im Rahmen der Erfindung ist es überdies vorgesehen, dass die Transportbahn im Bereich der Aufnahme-/Abgabestelle und im Bereich der Speicherstellen Unterbrechungen eines Führungsprofils für Bauteilträgerwägen umfasst. Die Unterbrechungen erlauben das Bewegen einzelner Bahnabschnitte relativ zueinander. Bevorzugt relevant sind die Unterbrechungen an der Einspurbahn, bei welcher an den Unterbrechungen der ansonsten formschlüssig gehaltene, und nur entlang der Transportbahn bewegliche Bauteilträgerwagen von der Transportbahn auf den Verfahrwagen bzw. von dem Verfahrwagen auf die Speicherstelle umsetzbar, insbesondere abhebbar ist .

Die ansonsten zumindest im Ausführungsfall der Einspurbahn bis auf die Bewegungsrichtung formschlüssig versatz-und kippsicher gehaltenen Bauteilträgerwägen werden im Bereich der Aufnahme-/Abgabestelle freigegeben, sodass sie erfindungsgemäß von der Transportbahn auf einen Verfahrwagen bzw. von einem Verfahrwagen auf die Speicherstelle umsetzbar, insbesondere abhebbar sind. Eine Unterbrechung des Führungsprofils ist dabei erforderlich, kann aber aufgrund der Mehrzahl von in der Regel an jedem Bauteilträgerwagen angeordneten Führungsmitteln, insbesondere Rollen oder dergleichen, überwunden werden, da stets mehrere Führungsmittel gehalten und geführt sind, und somit die frei, zwischen der Aufnahme/Abgabes und dem Verfahrwagen bzw. zwischen dem Verfahrwagen und der Speicherstelle wechselnden Führungsmittel dem Bahnverlauf folgen.

Eine bevorzugte Ausgestaltung der Speichereinrichtung sieht vor, dass der Verfahrwagen mindestens einen Antrieb für die Bewegung und Umsetzung eines Bauteilträgerwages umfasst.

Weiterhin vorteilhaft kann dabei vorgesehen sein, dass die Speicherstellen frei von Antrieben für eines Bewegung des Bauteilträgerwages ausgebildet sind.

Die Konzentration der für den Antrieb und die Positionierung der Bauteilträgerwagen erforderlichen Komponenten, wie z.B. Motoren, Kupplungen und Halterungen, in dem Verfahrwagen erlaubt eine technische Vereinfachung der in einer Vielzahl vorzusehenden Speicherstellen, was direkt mit einer Kostenersparnis und einfachen Erweiterbarkeit des Systems einhergeht, da neue Speicherstellen kaum zusätzlichen Anschlussaufwand und Steuerungen benötigen.

Eine weitere vorteilhafte Ausführung sieht vor, dass der Verfahrwagen mindestens ein Führungsprofil umfasst, welches zur Aufnahme und Führung eines Bauteilträgerwagens ausgebildet ist und insbesondere dem Führungsprofil der Transportbahn entspricht.

Ein entsprechender Verfahrwagen kann direkt von einem Bauteilträgerwagen befahren werden, indem der Verfahrwagen mit seinem Führungsprofil in den Verlauf der Transportbahn eingegliedert wird und der Bauteilträgerwagen auf diesen auffährt, bzw. sich darauf umsetzt. Auch ein Anheben und Aufsetzen oder ein Unterfahren des Bauteilträgerwagens durch den Verfahrwagen ist vorgesehen.

Weiterhin ist vorgesehen, dass das Führungsprofil des Verfahrwagens an mindestens einem, bevorzugt an beiden Enden Mittel zur Übernahme sowie Übergabe eines Bauteilträgerwages umfasst, wobei die Mittel derart ausgebildet sind, dass der Bauteilträgerwagen auf den Verfahrwagen vollständig auffahrbar oder von diesem vollständig herunterfahrbar ist.

Der entsprechend dieser Ausführung ausgebildete Verfahrwagen erlaubt das Aufnehmen und Abgeben eines Bauteilträgerwagens von bzw. an eine ansonsten passive Umgebung, z.B. an Speicherstellen. Der Bauteilträgerwagen wird dabei durch die Mittel, z.B. durch Reibrollen oder Greifsysteme in den Wirkungsbereich des Verfahrwagens, z.B. von Antriebsrollen auf dem Verfahrwagen gebracht, so dass keine zusätzlichen Antriebe oder mechanische Bewegungsmittel außerhalb des Verfahrwagens, insbesondere in den Speicherstellen erforderlich sind.

Die Erfindung wird nachfolgend schematisch an einem Ausführungsbeispiel einer Verwendung einer Speichereinrichtung dargestellt.

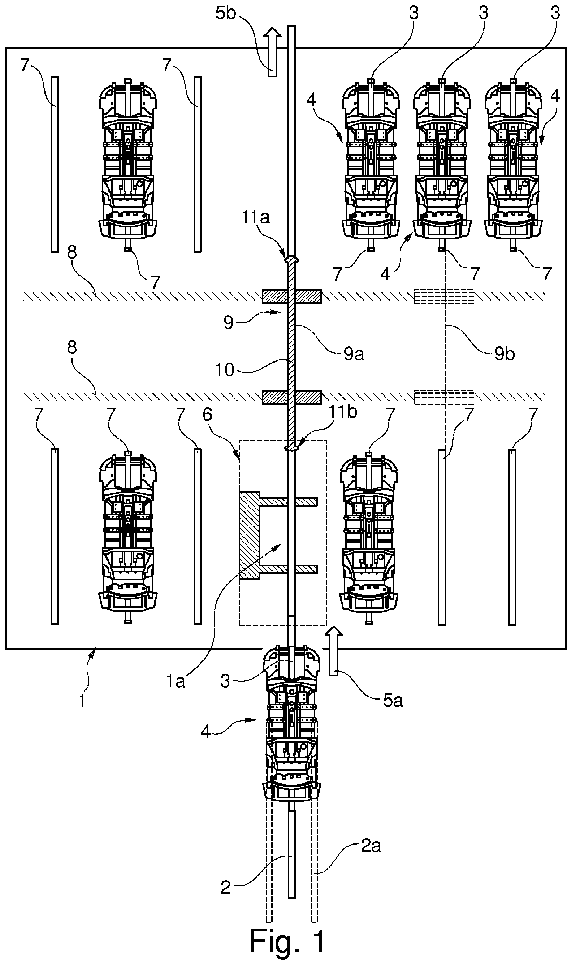

Figur 1 zeigt dabei eine Speichereinrichtung 1, welche an eine Einspurbahn 2 einer Fertigungsstraße angebunden ist. Aus Gründen der Übersichtlichkeit ist die ebenfalls einsetzbare Mehrspurbahn 2a nur gestrichelt, sowie weitere Arten von Transportbahnen nicht dargestellt.

Exemplarisch sind eine Mehrzahl von Karosserien 3 mit darunter angeordneten Bauteilträgerwägen 4 dargestellt.

Die Speichereinrichtung 1 umfasst eine Aufnahmestelle 5a sowie eine Abgabestelle 5b. ein Bauteilträgerwagen betritt die Speichereinrichtung 1 über die Aufnahmestelle 5a und wird dort von der Speichereinrichtung 1 auf ihre Speicherbahn 1a übernommen. Die Speicherbahn im allgemeinen Sinne ist die Bahn, auf welcher der Bauteilträgerwagen 4 in der Speichereinrichtung 1 geführt wird. Sie ist Abschnittsweise aufgebaut und kann sowohl Abschnitte auf dem Verfahrwagen 9 als auch in den Speicherstellen 7 umfassen.

Bei Anforderung der Fertigungsstrasse eines betreffenden Bauteilträgerwagens aus dem Lagerbestand der Speichereinrichtung 1 verlässt dieser die Speichereinrichtung 1 an der Abgabestelle 5b. Auch eine Ausführungsform mit nur einer Stelle zur Aufnahme und Abgabe ist denkbar.

Soweit für die benötigte Speicherkapazität zweckmäßig kann die Speichereinrichtung mit einer Hebeeinrichtung 6 ausgestattet werden. In der Speichereinrichtung 1 sind vorliegend zwölf Speicherstellen 7 vorgesehen, welche teilweise mit Bauteilträgerwägen 4 und darauf angeordneten Karosserien 3 belegt sind. Sollte eine weitre Ebene darüber oder darunter nutzbar gemacht werden, muss die Hebeeinrichtung 6 diese Ebenen bedienen.

Zwischen den Speicherstellen 7 sind Verfahrwege 8 für Verfahrwagen 9 ausgebildet, wobei vorliegend ein erster Verfahrwagen 9a zur Übergabe an der Aufnahme-/Abgabestelle 5 bereit steht und ein zweiter Verfahrwagen 9b (gestrichelt) an einer seitlich entlang des Verfahrwegs 8 angeordneten Entnahmestelle aus einer Speicherstelle 7 verweilt.

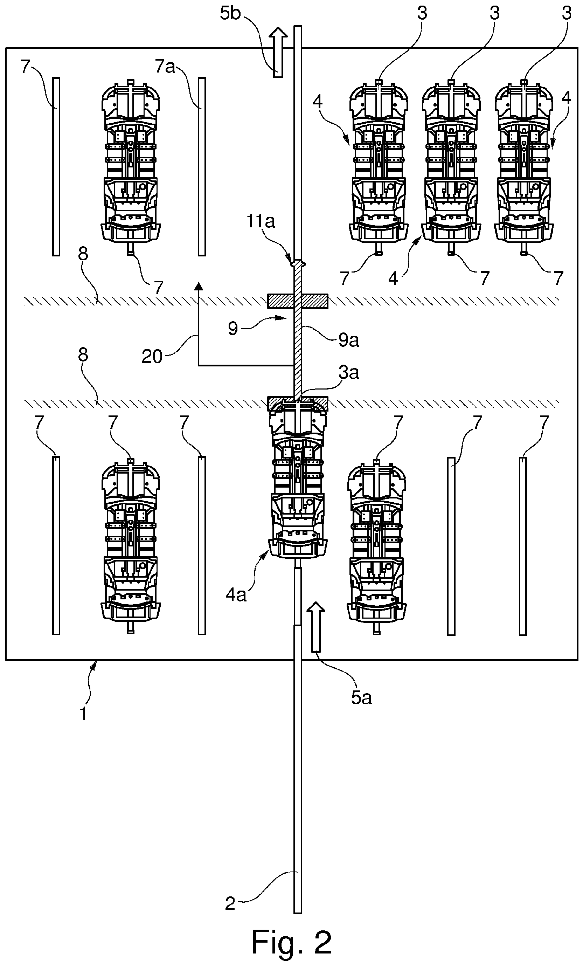

An dem Verfahrwagen 9a sind an beiden Enden des Führungsprofils 10 Mittel 11a und 11b zur Übernahme und Abgabe eines Bauteilträgerwagens 3 vorgesehen, welche einen ankommenden Bauteilträgerwagen 3 auf den Verfahrwagen 9a übernehmen und diesen dann später in eine Speicherstelle 7 abgeben können. Auch die Entnahme aus einer Speicherstelle 7 erfolgt durch die Mittel 11a bzw. 11b, ohne dass in der Speicherstelle 7 Antriebe oder dergleichen erforderlich sind. Exemplarisch soll nun das Aufnehmen des ankommenden Bauteilträgerwagens 4a mit der Karosserie 3a in die Speichereinrichtung 1 mittels Figur 2 erläutert werden.

Figur 2 zeigt den Bauteilträgerwagen 4a mit der Karosserie 3a in der Aufnahmestation 5a. Die Hebeeinrichtung 6 hat den Bauteilträgerwagen 4a angehoben und der Verfahrwagen 9a ist unter den Bauteilträgerwagen 3a eingefahren. Es besteht auch die vorliegend nicht dargestellte Möglichkeit, dass der Bauteilträgerwagen auf den Verfahrwagen 9a aufgebracht wird, während der Verfahrwagen 9a auf dem Verfahrweg 8 verweilt. Dies kann entweder durch eine bewegte Hebeeinrichtung 6 oder durch entsprechende Übergabemechanik, beispielsweise eine Rollenführung oder dergleichen erfolgen.

Zur Speicherung des Bauteilträgerwagens 4a wird der Verfahrwagen 9a nach der Aufnahme des Bauteilträgerwagens 4a nunmehr dem angedeuteten Pfad 20 folgen, und den Bauteilträgerwagen 4a in die Speicherstelle 7a übergeben.

### Bezugszeichenliste:

- 1: Speichereinrichtung
- 1a: Speicherbahn
- 2: Einspurbahn
- 2a: Mehrspurbahn
- 3: Karosserie
- 3a: Karosserie
- 4: Bauteilträgerwägen, Bauteilträger
- 4a: ankommender Bauteilträgerwagen
- 5a: Aufnahmestation, Aufnahmestelle
- 5b: Abgabestelle
- 6: Hebeeinrichtung
- 7: Speicherstellen
- 7a: Speicherstelle
- 8: Verfahrweg
- 9: Verfahrwagen
- 9a: erster Verfahrwagen
- 9b: zweiter Verfahrwagen
- 10: Führungsprofil
- 11a, 11b: Mittel
- 20: Pfad

## Patentansprüche

1. Verwendung einer Speichereinrichtung (1) für mindestens einen Bauteilträgerwagen (4, 4a) einer Fördereinrichtung für eine automatisierte Fertigungsstraße, wobei die Speichereinrichtung (1) mindestens eine Aufnahmestelle (5a) sowie mindestens eine Abgabestelle (5b) und mehrere Speicherstellen (7, 7a) umfasst, wobei die Bauteilträgerwagen (4, 4a) auf einer Transportbahn, insbesondere einer Einspurbahn(2), befördert werden, wobei die Bauteilträgerwagen (4, 4a) zur Speicherung in den Speicherstellen (7, 7a) von dieser Transportbahn auf eine Speicherbahn (1a) umsetzbar, insbesondere abhebbar sind und dass mindestens ein Verfahrwagen (9, 9a, 9b) umfasst ist, wobei der Verfahrwagen (9, 9a, 9b) zur Aufnahme eines von der Transportbahn umgesetzten, insbesondere angehobenen Bauteilträgerwagens (4, 4a) ausgebildet ist, **dadurch gekennzeichnet, dass** der Verfahrwagen (9, 9a, 9b) zwei Querträger umfasst, wobei die Querträger einen Bauteilträgerwagen (4, 4a) an Querträgern des Bauteilträgerwagens (4, 4a) aufnehmen und transportieren.

2. Verwendung einer Speichereinrichtung nach Anspruch 1, **dadurch gekennzeichnet, dass** mindestens eine Hebeeinrichtung (6) im Bereich der Aufnahmestelle (5a) und/oder Abgabestelle (5b) ausgebildet ist, um den Bauteilträger (4, 4a) zu greifen und von der Transportbahn abzuheben oder um einen Abschnitt mit einem Führungsprofil (10) oder einen Verfahrwagen (9, 9a) zu greifen, auf welchem der Bauteilträgerwagen (4, 4a) angeordnet ist.

3. Verwendung einer Speichereinrichtung nach Anspruch 1, **dadurch gekennzeichnet, dass** die Speicherstellen (7, 7a) in Form eines Rasters angeordnet sind und zwischen den Rastern Verfahrwege (8) für mindestens einen Verfahrwagen (9, 9a, 9b) zum Transport von abgehobenen Bauteilträgerwagen (4, 4a) umfasst sind.

4. Verwendung einer Speichereinrichtung nach einem der vorangegangenen Ansprüche, **dadurch gekennzeichnet, dass** die Transportbahn im Bereich der Aufnahme-/Abgabestelle (5a, 5b) und im Bereich der Speicherstellen (7, 7a) Unterbrechungen eines Führungsprofils für Bauteilträgerwägen (4, 4a) umfasst, wobei an den Unterbrechungen der ansonsten formschlüssig gehaltene, und nur entlang der Transportbahn bewegliche Bauteilträgerwagen (4, 4a) von der Transportbahn auf den Verfahrwagen (9, 9a, 9b) bzw. von dem Verfahrwagen (9, 9a, 9b) auf die Speicherstelle (7, 7a) umsetzbar, insbesondere abhebbar ist.

5. Verwendung einer Speichereinrichtung nach einem der vorangegangenen Ansprüche, **dadurch gekennzeichnet, dass** der Verfahrwagen (9,9a, 9b) mindestens einen Antrieb für die Bewegung und Umsetzung eines Bauteilträgerwages (4, 4a)umfasst.

6. Verwendung einer Speichereinrichtung nach einem der vorangegangenen Ansprüche, **dadurch gekennzeichnet, dass** der Verfahrwagen (9, 9a, 9b) mindestens ein Führungsprofil umfasst, welches zur Aufnahme und Führung eines Bauteilträgerwagens (4, 4a) ausgebildet ist und insbesondere einem Führungsprofil der Transportbahn entspricht.

7. Verwendung einer Speichereinrichtung nach Anspruch 6, **dadurch gekennzeichnet, dass** das Führungsprofil des Verfahrwagens (9, 9a, 9b) an mindestens einem, bevorzugt an beiden Enden Mittel zur Übernahme sowie Übergabe eines Bauteilträgerwages (4, 4a) umfasst, wobei die Mittel derart ausgebildet sind, dass der Bauteilträgerwagen (4, 4a) auf den Verfahrwagen (9, 9a, 9b) vollständig auffahrbar oder von diesem vollständig herunterfahrbar ist.

8. Verwendung einer Speichereinrichtung nach einem der vorangegangenen Ansprüche 1 bis 7, **dadurch gekennzeichnet, dass** die Speicherstellen (7, 7a) Antriebe für eine Bewegung des Bauteilträgerwages (4, 4a) ausgebildet sind.

9. Verwendung einer Speichereinrichtung nach einem der vorangegangenen Ansprüche, **dadurch gekennzeichnet, dass** eine Verfahrrichtung der Speicherbahn quer zu einer Einfahrrichtung des Bauteilträgerwagens (4, 4a) ausgerichtet ist, mit welcher der Bauteilträgerwagen (4, 4a) von der Transportbahn in die Aufnahmestelle (5a) einfahrbar ist, und dass eine Verfahrrichtung der Speicherbahn quer zu einer Ausfahrrichtung des Bauteilträgerwagens (4, 4a) ausgerichtet ist, mit welcher der Bauteilträgerwagen (4, 4a) von der Speicherbahn in die Ausgabestelle (5b) ausfahrbar ist.

## Claims

1. Use of a storage device (1) for at least one component-carrier carriage (4, 4a) of a conveying device for an automated production line, wherein the storage device (1) comprises at least one receiving point (5a) and at least one discharge point (5b) and multiple storage points (7, 7a), wherein the component-carrier carriages (4, 4a) are conveyed on a transport track, in particular a single-line track (2), wherein, for the purpose of being stored in the storage points (7, 7a), the component-carrier carriages (4, 4a) are able to be transferred, in particular are able to be lifted off, from said transport track onto a storage track (1a), and wherein at least one traversing carriage (9, 9a, 9b) is comprised, wherein the traversing carriage (9, 9a, 9b) is configured for receiving a component-carrier carriage (4, 4a) transferred, in particular lifted off, from the transport track, **characterized in that** the traversing carriage (9, 9a, 9b) comprises two crossmembers, wherein the crossmembers receive a component-carrier carriage (4, 4a) at crossmembers of the component-carrier carriage (4, 4a) and transport said component-carrier carriage.

2. Use of a storage device according to Claim 1, **characterized in that** at least one lifting device (6) in the region of the receiving point (5a) and/or discharge point (5b) is configured to grip the component carrier (4, 4a) and lift it off from the transport track or to grip a section with a guide profile (10) or a traversing carriage (9, 9a) on which the component-carrier carriage (4, 4a) is arranged.

3. Use of a storage device according to Claim 1, **characterized in that** the storage points (7, 7a) are arranged in the form of a grid and, between the grids, traversing paths (8) for at least one traversing carriage (9, 9a, 9b) for transport of lifted-off component-carrier carriages (4, 4a) are comprised.

4. Use of a storage device according to one of the preceding claims, **characterized in that** the transport track, in the region of the receiving/discharge point (5a, 5b) and in the region of the storage points (7, 7a), comprises interruptions of a guide profile for component-carrier carriages (4, 4a), wherein, at the interruptions, the component-carrier carriage (4, 4a), which is otherwise held in a form-fitting manner and is movable only along the transport track, is able to be transferred, in particular is able to be lifted off, from the transport track onto the traversing carriage (9, 9a, 9b) or from the traversing carriage (9, 9a, 9b) onto the storage point (7, 7a).

5. Use of a storage device according to one of the preceding claims, **characterized in that** the traversing carriage (9, 9a, 9b) comprises at least one drive for the movement and transfer of a component-carrier carriage (4, 4a).

6. Use of a storage device according to one of the preceding claims, **characterized in that** the traversing carriage (9, 9a, 9b) comprises at least one guide profile which is configured for receiving and guiding a component-carrier carriage (4, 4a) and which corresponds in particular to a guide profile of the transport track.

7. Use of a storage device according to Claim 6, **characterized in that** the guide profile of the traversing carriage (9, 9a, 9b) comprises at at least one end, preferable at both ends, means for takeover and delivery of a component-carrier carriage (4, 4a), wherein the means are formed in such a way that the component-carrier carriage (4, 4a) is able to be moved up completely onto the traversing carriage (9, 9a, 9b) or is able to be moved down completely from it.

8. Use of a storage device according to one of preceding Claims 1 to 7, **characterized in that** the storage points (7, 7a) are designed as drives for movement of the component-carrier carriage (4, 4a).

9. Use of a storage device according to one of the preceding claims, **characterized in that** a traversing direction of the storage track is oriented transversely to a moving-in direction of the component-carrier carriage (4, 4a), by way of which the component-carrier carriage (4, 4a) is able to be moved from the transport track into the receiving point (5a), and **in that** a traversing direction of the storage track is oriented transversely to a moving-out direction of the component-carrier carriage (4, 4a), by way of which the component-carrier carriage (4, 4a) is able to be moved out from the transport track into the discharge point (5b) .

## Revendications

1. Utilisation d'un dispositif de stockage (1) destiné à au moins un chariot porte-composants (4, 4a) d'un dispositif de transport d'une ligne de production automatisée, le dispositif de stockage (1) comprenant au moins un point de réception (5a) et au moins un point de livraison (5b) et plusieurs points de stockage (7, 7a), les chariots porte-composants (4, 4a) étant transportés sur un rail de transport, notamment un rail monovoie (2), les chariots porte-composants (4, 4a) destinés au stockage aux points de stockage (7, 7a) pouvant être repositionnés, en particulier soulevés, de ce rail de transport vers un rail de stockage (1a) et au moins un chariot de transfert (9, 9a, 9b) étant inclus, le chariot de transfert (9, 9a, 9b) étant conçu pour recevoir un chariot porte-composants (4, 4a) qui a été repositionné, en particulier soulevé, du rail de transport, **caractérisée en ce que** le chariot de transfert (9, 9a, 9b) comprend deux traverses, les traverses recevant un chariot porte-composants (4, 4a) au niveau de traverses du chariot porte-composants (4, 4a) et transportant ledit chariot porte-composants (4, 4a) .

2. Utilisation d'un dispositif de stockage selon la revendication 1, **caractérisée en ce qu'**au moins un dispositif de levage (6) au niveau du point de réception (5a) et/ou du point de livraison (5b) est conçu pour saisir le porte-composants (4, 4a) et le soulever du rail de transport ou saisir une portion munie d'un profilé de guidage (10) ou un chariot de transfert (9, 9a) sur lequel le chariot porte-composants (4, 4a) est disposé.

3. Utilisation d'un dispositif de stockage selon la revendication 1, **caractérisée en ce que** les points de stockage (7, 7a) sont disposés sous la forme d'une grille et des chemins de transfert (8) destinés à au moins un chariot de transfert (9, 9a, 9b) sont inclus entre les grilles pour transporter des chariots porte-composants soulevés (4, 4a).

4. Utilisation d'un dispositif de stockage selon l'une des revendications précédentes, **caractérisée en ce que** le rail de transport au niveau du point de réception/livraison (5a, 5b) et au niveau des points de stockage (7, 7a) comprend des interruptions dans un profil de guidage destiné à des wagons porte-composants (4, 4a), le chariot porte-composants (4, 4a), qui est par ailleurs maintenu par complémentarité de formes et qui est mobile seulement le long du rail de transport, pouvant être repositionné, notamment soulevé, au niveau des interruptions, du rail de transport jusque sur le chariot de transfert (9, 9a, 9b) ou du chariot de transfert (9, 9a, 9b) jusqu'au point de stockage (7, 7a) .

5. Utilisation d'un dispositif de stockage selon l'une des revendications précédentes, **caractérisée en ce que** le chariot de transfert (9, 9a, 9b) comprend au moins un entraînement destiné à déplacer et repositionner un chariot porte-composants (4, 4a).

6. Utilisation d'un dispositif de stockage selon l'une des revendications précédentes, **caractérisée en ce que** le chariot de transfert (9, 9a, 9b) comporte au moins un profilé de guidage qui est conçu pour recevoir et guider un chariot porte-composants (4, 4a) et qui correspond notamment à un profilé de guidage du rail de transport.

7. Utilisation d'un dispositif de stockage selon la revendication 6, **caractérisée en ce que** le profilé de guidage du chariot de transfert (9, 9a, 9b) comprend des moyens de réception et de transfert d'un chariot porte-composants (4, 4a) à au moins une extrémité, de préférence aux deux extrémités, les moyens étant conçus de manière que le chariot porte-composants (4, 4a) puisse être entièrement monté sur le chariot de transfert (9, 9a, 9b) ou entièrement descendu vers le bas depuis celui-ci.

8. Utilisation d'un dispositif de stockage selon l'une des revendications précédentes 1 à 7, **caractérisée en ce que** les points de stockage (7, 7a) sont conçus comme des entraînements destinés à déplacer le chariot porte-composants (4, 4a).

9. Utilisation d'un dispositif de stockage selon l'une des revendications précédentes, **caractérisée en ce qu'**une direction de transfert du rail de stockage est orientée transversalement à une direction d'entrée du chariot porte-composants (4, 4a) permettant d'amener le chariot porte-composants (4, 4a) depuis le rail de transport jusqu'au point de réception (5a) et **en ce qu'**une direction de transfert du rail de stockage est orientée transversalement à une direction de sortie du chariot porte-composants (4, 4a) permettant de sortir le chariot porte-composants (4, 4a) du rail de stockage et l'amener au point de livraison (5b).
